# EUROPÄISCHE PATENTANMELDUNG

(11) **EP 0 951 195 A2**
(43) Veröffentlichungstag der Anmeldung: **20.10.1999**
(21) Anmeldenummer: 99102980.2
(22) Anmeldetag: 15.02.1999
(51) Int. Cl.: H04Q 11/00

(54) **Optisches Übertragungsnetz und Verfahren zur Übertragung optischer Signale**

(30) Priorität: 18.04.1998 DE 19817282
(71) Anmelder: ROBERT BOSCH GMBH, 70442 Stuttgart (DE)
(72) Erfinder: Scheuing, Ernst-Ulrich, 71573 Allmersbach (DE)

(57) **Zusammenfassung**

Die Erfindung betrifft ein optisches Übertragungsnetz, mit einer optischen Übertragungsstrecke, die wenigstens einen, eine optische Schaltmatrix umfassenden Schaltknoten aufweist, wobei eine Übertragung optischer Signale in einem Wellenlängenmultiplex erfolgt.

Es ist vorgesehen, daß jeder Schaltknoten (18) an seiner Koppelstelle mit der optischen Übertragungsstrecke (12) ein Eingangs-/Ausgangsfilter (24, 26) aufweist, mittels denen, dem optischen Übertragungsnetz (10) zugeordnete Overhead-Signale ausfilterbar sind, und der Schaltknoten (18) eine Schaltmatrix (22) zur Verarbeitung der Overhead-Signale umfaßt.

## Beschreibung

Die Erfindung betrifft ein optisches Übertragungsnetz, mit einer optischen Übertragungsstrecke, die wenigstens einen, eine optische Schaltmatrix umfassenden Schaltknoten aufweist sowie ein Verfahren zur Übertragung optischer Signale.

### Stand der Technik

Optische Übertragungsnetze der gattungsgemäßen Art sind bekannt. Diese dienen dazu, zwischen wenigstens zwei Netzabschlüssen optische Signale zu übertragen. Die Übertragung der Signale erfolgt zwischen den Netzabschlüssen rein optisch, das heißt ohne Zwischenwandlung in elektrische Signale. Zum Routen einer wählbaren Verbindung zwischen den wenigstens zwei Netzabschlüssen sind optische Schaltknoten in die optische Übertragungsstrecke eingebunden. Die Schaltknoten umfassen wenigstens eine optische Schaltmatrix, mittels der wahlfreie Verbindungen zwischen einer Anzahl von Eingängen und einer Anzahl von Ausgängen der Schaltmatrix schaltbar sind. Um eine hohe Übertragungskapazität zu erreichen, ist bekannt, die optischen Signale in einem Wellenlängenmultiplex zu übertragen, das heißt, über die optische Übertragungsstrecke werden eine Anzahl Signale mit unterschiedlichen Wellenlängen gleichzeitig übertragen, wobei jede Wellenlänge mit einem unabhängigen Nutzsignal modulierbar ist. Entsprechend der Anzahl der gleichzeitig übertragbaren Signale unterschiedlicher Wellenlängen besitzt das optische Übertragungsnetz eine entsprechende Anzahl von optischen Kanälen.

Die Signale, die in einem optischen Kanal übertragen werden, können in bekannter Weise (zum Beispiel Zeitmultiplex) aus einer großen Anzahl von elektrischen Kanälen gebildet werden. Nachfolgend wird der Begriff optischer Kanal lediglich als Kanal bezeichnet.

Für eine Steuerung und Überwachung des optischen Übertragungsnetzes ist bekannt, jedem Kanal eine Zusatzübertragungskapazität, einen sogenannten Kanal-Overhead, zuzuordnen. Da das optische Übertragungsnetz unabhängig von einer Nutzlastfunktion funktionsfähig sein muß, können die Nutzsignale für die Übertragung dieses Kanal-Overheads nicht genutzt werden. Um den Multiplexbetrieb des optischen Übertragungsnetzes zu überwachen und zu steuern, ist bekannt, eine weitere Zusatzübertragungskapazität, einen sogenannten Multiplex-Section-Overhead, zu übertragen, der der Gesamtzahl der auf einer Verhinderung des optischen Übertragungsnetzes übertragbaren Kanäle zugeordnet ist.

Um eine während der Übertragung der optischen Signale über das optische Übertragungsnetz auftretende Dämpfung der optischen Übertragungsstrecke ausgleichen zu können, ist der Einsatz optischer Verstärker bekannt, die den Signalpegel der zu übertragenden optischen Signale anheben. Um diese optischen Verstärker überwachen und orten zu können, ist eine weitere Zusatzübertragungskapazität, ein sogenannter Übertragungsstrecken-Overhead (Transmission-Section-Overhead), zu übertragen.

Bei einem optischen Übertragungsnetz, bei dem beispielsweise gleichzeitig sechzehn Kanäle übertragbar sind, sind somit insgesamt achtzehn Overheads zu übertragen, die die Übertragungekapazität des optischen Übertragungsnetzes für Nutzsignale einschränken.

### Vorteile der Erfindung

Das optische Übertragungsnetz mit den im Anspruch 1 genannten Merkmalen und das Verfahren zur Übertragung optischer Signale mit den im Anspruch 10 genannten Merkmalen bietet den Vorteil, daß insgesamt nur ein Kanal für die Übertragung mehrerer Zusatzübertragungskapazitäten (Overheads) zur Verfügung stehen muß. Die Gesamtübertragungskapazität des optischen Übertragungsnetzes wird somit durch die für die Überwachung und Steuerung des optischen Übertragungsnetzes notwendige Übertragung der Overheads nur unwesentlich beeinträchtigt. Insbesondere dadurch, daß jeder Schaltknoten an seinen Koppelstellen mit der optischen Übertragungsstrecke ein Eingangs-/Ausgangsfilter aufweist, mittels denen die dem optischen Übertragungsnetz zugeordneten Overhead-Signale ausfilterbar sind, und der Schaltknoten eine Schaltmatrix zur Verarbeitung der Overhead-Signale umfaßt, ist vorteilhaft möglich, die Overhead-Signale aus den gesamten, übertragenen Signalen abzuspalten und diese in einer dem Schaltknoten vorzugsweise parallelgeschalteten Schaltmatrix zu verarbeiten.

Insbesondere ist bevorzugt, wenn die einzelnen Overhead-Signale in einem Overhead-Multiplex-Signal zusammengefaßt sind und in der parallelen Schaltmatrix zur Verarbeitung demultiplext werden, so daß eine eindeutige Zuordnung der einzelnen Overhead-Signale zu den einzelnen Kanälen, dem Kanalbündel beziehungsweise der Übertragungsstrecke möglich ist.

In weiterer bevorzugter Ausgestaltung der Erfindung ist vorgesehen, daß die Nutzsignale und die Overhead-Signale im Schaltknoten kanalbezogen verknüpfbar sind. Hierdurch wird vorteilhaft erreicht, daß eine Zuordnung der Overhead-Signale zu den entsprechenden kanalbezogenen Nutzsignalen möglich ist und diese gemeinsam in dem Schaltknoten durchschaltbar sind. Fehlschaltungen, beispielsweise eine unterschiedliche Schaltung eines Nutzsignals und eines dem das Nutzsignal übertragenden Kanal zugeordneten Overhead-Signals, werden hierdurch vermieden.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: ein Blockschaltbild eines Schaltknotens eines optischen Übertragungsnetzes in einer ersten Ausführungsvariante und
- Figur 2: ein Blockschaltbild eines Schaltknotens eines optischen Übertragungsnetzes in einer zweiten Ausführungsvariante.

### Beschreibung der Ausführungsbeispiele

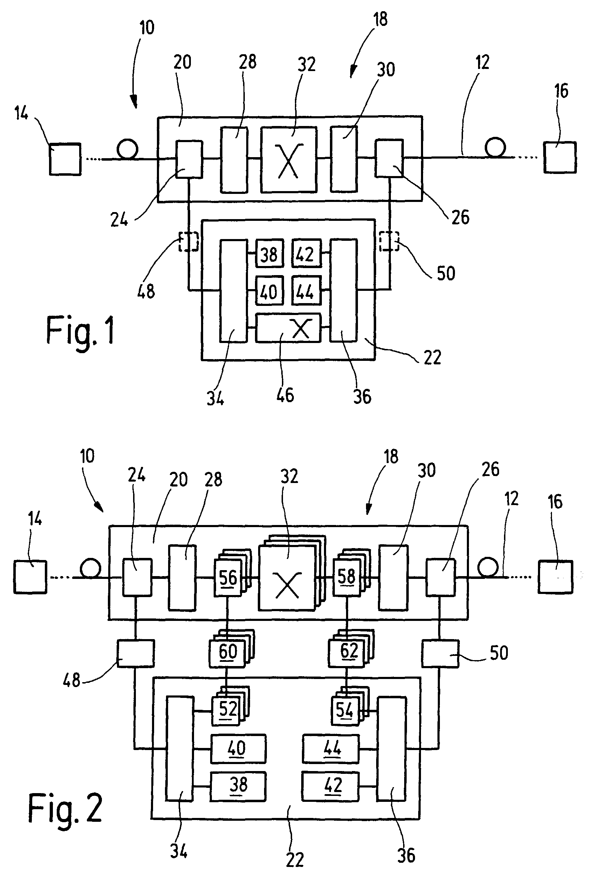

Figur 1 zeigt ein optisches Übertragungsnetz 10. Dieses umfaßt eine optische Übertragungsstrecke 12, beispielsweise ein Glasfaserkabel, über die wenigstens zwei Netzabschlüsse 14 beziehungsweise 16 miteinander verbindbar sind. Jeder der Netzabschlüsse besitzt wenigstens einen Sender und wenigstens einen Empfänger für optische Signale. Das Übertragungsnetz 10 ist somit bidirektional betreibbar. In die optische Übertragungsstrecke 12 ist wenigstens ein optischer Schaltknoten 18 eingefügt, der dem wahlfreien Routen von mittels der Netzabschlüsse 14 beziehungsweise 16 gesendeten optischen Signalen dient. Der Schaltknoten 18 besitzt eine optische Schaltmatrix 20 sowie eine elektrische Schaltmatrix 22. Entsprechend einer Anzahl gleichzeitig zu übertragender Kanäle sind eine Vielzahl von Eingängen mit einer Vielzahl von Ausgängen des Schaltknotens 18 wahlfrei verbindbar. Die elektrische Schaltmatrix 22 ist hierbei der optischen Schaltmatrix 20 parallelgeschaltet. Der Schaltknoten 18 besitzt ein Eingangs-/Ausgangsfilter 24 sowie ein Eingangs-/Ausgangsfilter 26. Mittels der Filter 24 beziehungsweise 26 sind von den auf der Übertragungsstrecke 12 übersandten optischen Signalen, je nach Struktur der Filter 24, 26, Signale einer bestimmten Wellenlänge (Kanal) abzweigbar. Eine Übertragung von Daten über die optische Übertragungsstrecke 12 erfolgt in einem Multiplexbetrieb, das heißt, gleichzeitig sind optische Signale verschiedener Wellenlängen übertragbar. Nach einem konkreten Beispiel sind beispielsweise optische Signale mit sechzehn verschiedenen Wellenlängen übertragbar, so daß insgesamt sechzehn Kanäle zur Verfügung stehen. Von diesen sechzehn Kanälen dienen fünfzehn Kanäle der Übertragung von Nutz-Signalen und ein Kanal der Übertragung von sogenannten Overhead-Signalen. Die Overhead-Signale bestimmter Wellenlänge werden über die Filter 24 beziehungsweise 26 ausgekoppelt und der elektrischen Schaltmatrix 22 zugeführt.

Die Overhead-Signale des einen Kanales umfassen Overhead-Signalanteile jedes der anderen, hier fünfzehn, Kanäle, die zur Übertragung der Nutzsignale zur Verfügung stehen. Ferner sind Overhead-Signalanteile enthalten, die der Überwachung und Steuerung der im Wellenlängenmultiplexer übertragenen Bündel der einzelnen Nutzsignale über die Übertragungsstrecke 12 dienen. Weitere Overhead-Signalanteile dienen der Überwachung und Steuerung von, hier nicht dargestellten, Verstärkereinrichtungen, zur Anhebung eines Pegels der übertragenen optischen Signale, um Dämpfungen ausgleichen zu können.

Das Filter 24 ist mit einem Wellenlängenmultiplexer 28 und das Filter 26 mit einem Wellenlängenmultiplexer 30 verbunden. Die Wellenlängenmultiplexer 28 und 30 sind mit einem optischen Matrixbaustein 32 verbunden. Über die Wellenlängenmultiplexer 28 beziehungsweise 30 erfolgt eine Aufsplittung der einzelnen Kanäle auf jeweils einen Eingang des Matrixbausteins 32 und die Zusammenfassung der Kanäle von den Ausgängen der Matrix 32.

Die elektrische Schaltmatrix 22 umfaßt einen Demultiplexer/Multiplexer 34 sowie einen Multiplexer/Demultiplexer 36. Der Demultiplexer/Multiplexer 34 ist mit dem Filter 24 und der Multiplexer/Demultiplexer 36 mit dem Filter 26 verbunden. Dem Demultiplexer/Multiplexer 34 ist eine Bearbeitungsstufe 38 für sogenannte Multiplex-Section-Overheads nachgeschaltet. Diese Multiplex-Section-Overheads dienen der Überwachung und Steuerung der Übertragung des gesamten Bündels der optischen Signale über sämtliche Kanäle der Übertragungsstrecke 12. Dem Demultiplexer/Multiplexer 34 ist ferner eine Bearbeitungsstufe 40 nachgeschaltet, die der Bearbeitung von sogenannten Transmission-Section-Overheads dient, die der Überwachung und Steuerung von Hardwareeinrichtungen, beispielsweise Verstärkern oder Glasfaserleitungen, des optischen Übertragungsnetzes 10 dienen. Ferner sind Bearbeitungsstufen 42 und 44 vorgesehen, die mit dem Multiplexer/Demultiplexer 36 verbunden sind. Hierbei dient die Bearbeitungsstufe 42 wiederum der Bearbeitung von Multiplex-Section-Overheads und die Bearbeitungsstufe 44 der Bearbeitung von Transmission-Section-Overheads. Ferner ist zwischen die Multiplexer/Demultiplexer 34 und 36 ein Matrixbaustein 46 geschaltet, der dem Durchschalten von Kanal-Overheads dient. Der Aufbau des Matrixbausteins 46 entspricht hierbei dem Aufbau des Matrixbausteins 32, das heißt, über diesen sind die gleiche Anzahl von Ein- beziehungsweise Ausgängen wahlfrei miteinander verbindbar.

Zwischen den Filtern 24 und 26 und der elektrischen Schaltmatrix 22 sind jeweils hier angedeutete Wandler 48 beziehungsweise 50 geschaltet, die einer Wandlung von optischen in elektrische Signale und umgekehrt dienen.

Das in Figur 1 gezeigte optische Übertragungsnetz 10 zeigt folgende Funktion:

Über die Übertragungsstrecke 12 werden die Nutzsignale in den zur Verfügung stehenden Kanälen übertragen. Einer der Kanäle dient der Übertragung der Overhead-Signale. Je nach Übertragungsrichtung über die Übertragungsstrecke 12 wird der Kanal, der die Overhead-Signale überträgt, über das Filter 24 beziehungsweise das Filter 26 abgespalten. Die restlichen Kanäle werden auf die Wellenlängenmultiplexer 28 beziehungsweise 30 durchgeschaltet und entsprechend der Anzahl der Kanäle auf die Eingänge des Matrixbausteines 32 geleitet. Über eine, nicht erläuterte Ansteuerung des Matrixbausteines 32 ist eine Durchechaltung der Signale in einzelnen Kanälen auf wahlfreie Ausgänge möglich.

Die über die Filter 24 beziehungsweise 26 abgespalteten Overhead-Signale werden über den Wandler 48 beziehungsweise 50 in elektrische Signale gewandelt. Diese elektrischen Signale werden über die Multiplexer/Demultiplexer 34 beziehungsweise 36 demultiplext und entsprechend ihrer Zuordnung, entweder Kanal-Overhead, Multiplex-Section-Overhead oder Transmission-Section-Overhead, auf die entsprechenden Bearbeitungsstufen 38 oder 40 oder dem Matrixbaustein 46 geleitet. Über den Matrixbaustein 46 erfolgt eine parallele Durchschaltung der kanalbezogenen Overheads entsprechend der Durchechaltung der Nutzsignale auf den einzelnen Kanäle über den Matrixbaustein 32. Nach erfolgter Durchschaltung werden die Signale - je nach Übertragungsrichtung - über die Multiplexer/Demultiplexer 34 und 36 wieder zusammengefaßt und über die Wandler 48 beziehungsweise 50 in optische Signale gewandelt. Über das Filter 24 beziehungsweise das Filter 26 erfolgt dann eine Zumischung des, die Overhead-Signale übertragenden Kanales zu den weiteren, der Übertragung der Nutzsignale dienenden Kanäle auf die Übertragungsstrecke 12. Über die Bearbeitungsstufen 38, 40, 42 beziehungsweise 44 kann eine Auswertung beziehungsweise Bearbeitung der Overhead-Signale erfolgen, die der Überwachungsteuerung des Multiplexbetriebes der Übertragungsstrecke 12 oder der Überwachungssteuerung von Hardwareeinrichtungen der Übertragungsstrecke 12 dienen.

Bei der in Figur 1 gezeigten Schaltungsvariante wird davon ausgegangen, daß der optische Matrixbaustein 32 und der elektrische Matrixbaustein 46 synchron schalten, damit die den einzelnen Kanälen zugeordneten Overhead-Signale gleich geroutet werden. Für den Fall, daß bei dem optischen Matrixbaustein 32 und/oder dem elektrischen Matrixbaustein 46 ein Schaltfehler auftritt, kann es zu einer Fehlschaltung eines kanalbezogenen Overhead-Signales kommen.

Figur 2 zeigt ein Blockschaltbild eines abgewandelten Aufbaues eines Schaltknotens 18, um diese Fehlerquelle auszuschließen. Gleiche Teile wie in Figur 1 sind mit gleichen Bezugszeichen versehen und nicht nochmals erläutert.

Der in Figur 1 gezeigte Matrixbaustein 46 der elektrischen Schaltmatrix 22 ist hier aufgesplittet und in, in einer Anzahl der zu übertragenden Kanäle entsprechenden Anzahl einzelner Kanalelemente 52 beziehungsweise 54 aufgesplittet. Jedem der Kanalelemente 52 beziehungsweise 54 ist über den Demultiplexer/Multiplexer 34 ein dem jeweiligen Kanal zugeordnetes demultiplextes Kanal-Overhead-Signal zuordbar.

In gleicher Weise werden über die der optischen Schaltmatrix 20 zugeordneten Wellenlängenmultiplexer 28 beziehungsweise 30 die optischen, jeweils einem Kanal zugeordneten Nutzsignale in Kanalelemente 56 beziehungsweise 58 aufgesplittet. Zwischen den Kanalelementen 52 und 56 beziehungsweise 54 und 58 besteht eine Verbindung über jeweils eine entsprechende Anzahl elektro-optischer Wandler 60 beziehungsweise 62.

Das in Figur 2 gezeigte optische Übertragungsnetz 10 zeigt folgende Funktion:

Zunächst wird in analoger Weise, wie bei dem Ausführungsbeispiel gemäß Figur 1, die Abzweigung des, die Overhead-Signale übertragenden Kanales über das Filter 24 beziehungsweise 26 vorgenommen. Das Overhead-Signal wird über die Multiplexer/Demultiplexer 34 beziehungsweise 36 in die Kanal-Overheads, die Multiplex-Section-Overheads und die Transmission-Section-Overheads aufgeteilt. Die Kanal-Overheads werden hierbei jeweils einem, dem entsprechenden Kanal zugeordneten Kanalelement 52 zugeordnet. Anschließend wird über den Wandler 60 das vom Kanalelement 52 als elektrisches Signal vorliegende, kanalbezogene Overhead in ein optisches Signal gewandelt und dem entsprechenden kanalbezogenen Kanalelement 56, das das Nutzsignal enthält, als optisches Signal mitgegeben. Die elektrooptischen Wandler 60 und 62 können für den gleichen Übertragungskanal (Wellenlänge) ausgelegt sein, da die Overhead-Signale direkt nach der Schaltmatrix 32 wieder abgetrennt werden und so eine gegenseitige Beeinflussung nicht auftreten kann. Anschließend erfolgt über den optischen Matrixbaustein 32 die gewollte Weiterschaltung auf einen der Ausgänge. Über die Kanalelemente 58 erfolgt anschließend die Ausfilterung der Kanal-Overheads der entsprechenden Kanäle. Diese werden anschließend über die Wandler 62 in elektrische Signale gewandelt und den Kanalelementen 54 zugeführt. Über den Multiplexer/Demultiplexer 36 werden anschließend die Kanal-Overheads, MultiplexSection-Overheads und Transmission-Section-Overheads zusammengeführt und über den Wandler 50 in ein optisches Signal gewandelt und über das Filter 26 dem Multiplex-Kanalbündel als Overhead-Kanal beigegeben.

Durch die in Figur 2 gezeigte Anordnung wird erreicht, daß die kanalbezogenen Nutzsignale und die kanalbezogenen Overhead-Signale gemeinsam über den optischen Matrixbaustein 32 geschaltet werden. Diese werden hierzu vor dem Matrixbaustein 32 zusammengeführt und anschließend wieder getrennt, so daß an der getrennten Übertragung der kanalbezogenen Overhead-Signale in einem gemeinsamen Kanal beibehalten wird. Die Aufsplittung der Overhead-Signale und Zuordnung zu den jeweiligen Nutzsignalen erfolgt lediglich zum gemeinsamen synchronen Durchschalten. Hierdurch sind Fehlschaltungen beziehungsweise abweichende Schaltungen zwischen den einem Kanal zugeordneten Nutzsignalen und Overhead-Signalen ausgeschlossen.

## Patentansprüche

1. Optisches Übertragungsnetz, mit einer optischen Übertragungsstrecke, die wenigstens einen, eine optische Schaltmatrix umfassenden Schaltknoten aufweist, wobei eine Übertragung optischer Signale in einem Wellenlängenmultiplex erfolgt, **dadurch gekennzeichnet**, daß jeder Schaltknoten (18) an seiner Koppelstelle mit der optischen Übertragungsstrecke (12) ein Eingangs-/Ausgangsfilter (24, 26) aufweist, mittels denen, dem optischen Übertragungsnetz (10) zugeordnete Overhead-Signale ausfilterbar sind, und der Schaltknoten (18) eine Schaltmatrix (22) zur Verarbeitung der Overhead-Signale umfaßt.

2. Optisches Übertragungsnetz nach Anspruch 1, **dadurch gekennzeichnet**, daß den Eingangs- /Ausgangsfiltern (24, 26) opto-elektrische Wandler (48, 50) zur Wandlung der optischen Overhead-Signale in elektrische Overhead-Signale nachgeschaltet sind, und die Schaltmatrix eine elektrische Schaltmatrix (22) ist.

3. Optisches Übertragungsnetz nach einem der vorhergehenden Ansprüche, **dadurch gekennzeichnet**, daß die elektrische Schaltmatrix (22) der optischen Schaltmatrix (20) parallelgeschaltet ist.

4. Optisches Übertragungsnetz nach einem der vorhergehenden Ansprüche, **dadurch gekennzeichnet**, daß die elektrische Schaltmatrix (22) Multiplexer/Demultiplexer (34, 36) aufweist, mittels denen aus den Overhead-Signalen Signalanteile für Kanal-Overheads, Multiplex-Section-Overheads und Transmission-Section-Overheads vereinzelbar sind.

5. Optisches Übertragungsnetz nach einem der vorhergehenden Ansprüche, **dadurch gekennzeichnet**, daß die elektrische Schaltmatrix (22) Bearbeitungsstufen (38, 40, 42, 44) für die Multiplex-Section-Overheads und Transmission-Section-Overheads aufweist.

6. Optisches Übertragungsnetz nach einem der vorhergehenden Ansprüche, **dadurch gekennzeichnet**, daß die elektrische Schaltmatrix (22) einen Matrixbaustein (46) zur Schaltung der Kanal-Overheads aufweist.

7. Optisches Übertragungsnetz nach einem der vorhergehenden Ansprüche, **dadurch gekennzeichnet**, daß die optische Schaltmatrix (20) einen Matrixbaustein (32) zur Schaltung von kanalbezogenen Nutzsignalen aufweist, und der Matrixbaustein (32) mit dem Matrixbaustein (46) synchron schaltbar ist.

8. Optisches Übertragungsnetz nach einem der Ansprüche 1 bis 5, **dadurch gekennzeichnet**, daß die elektrische Schaltmatrix (22) Kanalelemente (52, 54) aufweist, die jeweils einem kanalbezogenen Overhead-Signal zugeordnet sind.

9. Optisches Übertragungsnetz nach Anspruch 8, **dadurch gekennzeichnet**, daß jedes der Kanalelemente (52, 54) über einen elektro-optischen Wandler (60, 62) mit jeweils einem, der optischen Schaltmatrix (20) zugeordneten Kanalelement (56, 58) verbunden ist.

10. Verfahren zur Übertragung optischer Signale über eine optische Übertragungsstrecke, wobei die optischen Signale in einem Wellenlängen-Multiplexbetrieb in wenigstens zwei Kanälen übertragen werden und über wenigstens einen Schaltknoten zum Routen von Verbindungen zwischen wenigstens zwei Netzabschlüssen geführt werden, und wobei mit den Kanälen zugeordneten Nutzsignalen Overhead-Signale zur Überwachung einer kanalbezogenen Nutzsignalübertragung, Overhead-Signale zur Überwachung des Multiplexbetriebes und Overhead-Signale zur Überwachung der Übertragungsstrecke übertragen werden, **dadurch gekennzeichnet**, daß die einzelnen Overhead-Signale als Overhead-Multiplex-Signal gemeinsam in einem Kanal übertragen werden und an den Schaltknoten zur Bearbeitung und/oder Auswertung und/oder Durchschaltung demultiplext werden.

11. Verfahren nach Anspruch 10, **dadurch gekennzeichnet**, daß die Overhead-Signale an den Schaltknoten in elektrische Signale gewandelt werden und einer elektrischen Schaltmatrix, die einer optischen Schaltmatrix zur Schaltung der Nutzsignale parallelgeschaltet ist, zugeführt werden.

12. Verfahren nach einem der vorhergehenden Ansprüche, **dadurch gekennzeichnet**, daß die demultiplexten Kanal-Overhead-Signale im Schaltknoten den demultiplexten Nutzsignalen angefügt werden, und mit diesen gemeinsam geschaltet werden.

13. Verfahren nach Anspruch 12, **dadurch gekennzeichnet**, daß die demultiplexten Kanal-Overhead-Signale in optische Signale zur gemeinsamen Schaltung mit den Nutzsignalen gewandelt werden.

14. Verfahren nach einem der vorhergehenden Ansprüche, **dadurch gekennzeichnet**, daß die mit den Nutzsignalen geschalteten kanalbezogenen Kanal-Overhead-Signale anschließend abgezweigt und dem Overhead-Multiplex-Signal zugeführt werden.
